# EUROPÄISCHE PATENTANMELDUNG

(11) **EP 0 867 321 A1**
(43) Veröffentlichungstag der Anmeldung: **30.09.1998**
(21) Anmeldenummer: 98105466.1
(22) Anmeldetag: 26.03.1998
(51) Int. Cl.: B60J 7/043

(54) **Fahrzeugdach mit wenigstens einem an seiner Hinterkante anhebbaren und oberhalb des festen Fahrzeugdachs verschiebbaren Deckel**

(30) Priorität: 29.03.1997 DE 19713348
(71) Anmelder: WEBASTO KAROSSERIESYSTEME GmbH, D-82131 Stockdorf (DE)
(72) Erfinder: Wingen, Bernhard, 83620 Feldkirchen (DE)
(74) Vertreter: Wiese, Gerhard

(57) **Zusammenfassung**

Die Erfindung betrifft ein Fahrzeugdach mit wenigstens einem Deckel (3), der zum Öffnen mittels eines Ausstellhebels (27) an seiner Hinterkante anhebbar und anschließend oberhalb des festen Fahrzeugdachs (1) verschiebbar ist, wobei die Verschiebebewegung mittels eines ersten Antriebskabels (37) und die Ausstellbewegung mittels eines gegenläufig dazu bewegbaren zweiten Antriebskabels (38) erfolgt. Um eine sauber definierte Trennung der Ausstellbewegung und der Verschiebebewegung zu ermöglichen, ist erfindungsgemäß vorgesehen, daß jeweils eines der Antriebskabel (37 bzw. 38) zumindestens während eines Teils der Bewegung des anderen Antriebskabels (38 bzw. 37) einen Leerweg durchläuft, in dem die Ausstellbewegung oder die Verschiebebewegung des Deckels (3) bewirkende Teile (Gleitschlitten 24, Steuerschlitten 10) von dem jeweiligen Antriebskabel (37 bzw. 38) entkoppelt sind.

## Beschreibung

Die Erfindung bezieht sich auf ein Fahrzeugdach mit wenigstens einem Deckel, der zum Öffnen mittels eines Ausstellhebels an seiner Hinterkante anhebbar und anschließend oberhalb des festen Fahrzeugdaches verschiebbar ist, wobei die Verschiebebewegung mittels eines ersten Anthebskabels und die Ausstellbewegung mittels eines gegenläufig dazu bewegbaren zweiten Anthebskabels erfolgt.

Ein derartiges Fabrzeugdach ist aus der DE-42 38 945 C1 bekannt. Bei diesem steht ein die Ausstellbewegung steuernder Ausstellhebel über einen hinteren Schlitten in standigem Eingriff mit einem Antriebskabel, während ein nahe der Vorderkante angeordneter Schlitten, der für die Verschiebebewegung des Deckels zuständig ist, in ständigem Eingriff mit einem gegerläufig dazu bewegbaren anderen Antriebskabel steht. Durch diese ständige Kopplung ist eine saubere Trennung der Ausstellbewegung von der Verschiebebewegung nur sehr bedingt möglich. Für die Ausstellbewegung steht nur ein sehr kurzer Verfahrweg des Antriebskabels zur Verfügung.

Der Erfindung liegt die Aufgabe zugrunde, ein gattungsgemäßes Fahrzeugdach zu schaffen, bei dem die verschiedenen Bewegungsphasen je nach Erfordernis getrennt voneinander oder überlagert erfolgen können.

Diese Aufgabe wird erfindungsgemäß dadurch gelöst, daß jeweils eines der Antriebskabel zumindestens während eines Teils der Bewegung des anderen Antriebskabels einen Leerweg durchläuft, in dem die Ausstellbewegung oder die Verschiebebewegung des Deckels bewirkende Teile von dem jeweiligen Antriebskabel entkoppelt sind. Vorteilhafte Ausgestaltungen der Erfindung sind den Unteransprüchen zu entnehmen. Eine derartige Mechanik läßt sich auch vorteilhaft zum Betätigen eines Schiebehimmel- oder Rollosystems verwenden, sodaß einer der Himmel bzw. Rollos zumindestens teilweise unabhängig von einem zweiten mittels eines eizizigen Antriebs bewegbar ist.

Für eine klar definierte Position des Deckels während der Ausstellbewegung ist es vorteilhaft, wenn ein die Verschiebebewegung des Deckels bewirkender Steuerschlitten während der Ausstellbewegung über einen Riegelstein mit einer dachfesten Führungsschiene verriegelt ist.

Es ist weiterhin vorteilhaft, wenn das erste Antriebskabel nach Beendigung eines Leerweges bei vollendeter Ausstellbewegung den Riegelstein aus seiner Verriegelungsposition mit der Fûhrungsschiene in eine Kopplungsposition des Antriebskabels mit dem Steuerschlitten bewegt. Durch die Entkopplung von der Führungsschiene und gleichzeitige Kopplung mit dem Steuerschlitten wird ein eindeutiger Beginn der Verschiebebewegung definiert.

Vorteilhafterweise wird der die Ausstellbewegung der Deckelhinterkante bewirkende Ausstellhebel an einen mit dem zweiten Antriebskabel über einen Riegelstein koppelbaren Gleitschlitten angelenkt, der nach vollendeter Ausstellbewegung mittels des Riegelsteins vom zweiten Antriebskabel entkoppelbar und gleichzeitig mit der Führungsschiene verriegelbar ist. Durch die Verriegelung mit der Führungsschiene wird der Ausstellhebel in einer eindeutigen Position fixiert, sodaß er bei einer Schließbewegung des Deckels wieder eindeutig mit diesem koppelbar ist.

Um den Deckel vor Beginn der Verschiebebewegung auch von einer vorderen Dichtung frei zu bekommen, ist es vorteilhaft, wenn mit dem Gleitschlitten ein Steuerelement verbunden ist, welches bei einer Ausstellbewegung der Deckelhinterkante gleichzeitig eine überlagerte Anhebebewegung der Deckelvorderkante bewirkt. Dieses vorteilhafterweise in Form einer verschiebbaren Anhebekulisse mit einer Kulissenbahn ausgebildete Steuerelement wirkt vorzugsweise auf einen ortsfest gelagerten Anhebe-Hebel ein, der mit einem am Deckel in der Nähe von dessen Vorderkante befestigten Hebebolzen zusammenwirkt.

Damit der Ausstellhebel und gegebenenfalls der zusätzliche Anhebe-Hebel nicht während der Verschiebebewegung in einer aufgerichteten Position stehenbleiben, die den optischen Eindruck des Fahrzeugdachs bei geöffnetem Deckel beeinträchtigen würde, ist es vorteilhaft, daß die Entkoppelung des Gleitschlittens vom zweiten Antriebskabel erst dann erfolgt, wenn der Ausstellhebel, sowie gegebenenfalls der Anhebe-Hebel in eine abgesenkte Position gebracht worden sind.

Die Mechanik des Fahrzeugdaches ist besonders vorteilhaft bei einem solchen Dach einsetzbar, bei dem der Deckel während der Verschiebebewegung von einem vom Ausstellhebel unabhängigen Stützhebel abgestützt wird.

Dabei ergibt sich ein besonders ansprechendes glattflächiges Erscheinungsbild des geschlossenen Deckels und ein ansprechendes Erscheinungsbild des geöffneten Deckels dadurch, daß der Deckel während der Verschlebebewegung ausschließlich von dachfesten Führungen geführt wird, die unterhalb des Niveaus der festen Dachhaut angeordnet sind. Die Möglichkeit, dachfeste Führungen bei einem außen geführten Deckel unterhalb der festen Dachhaut anzuordnen, steht in engem Zusammenhang mit der vorstehend beschriebenen Möglichkeit des separaten An- und Abkoppelns von Antriebsschlitten für die Ausstell- bzw. Verschiebebewegung.

Nachfolgend ist ein Ausführungsbeispiel der Erfindung anhand der Zeichnungen beschrieben. Es zeigt:
- Fig. 1: eine schematische perspektivische Ansicht eines Fahrzeugdachs mit geschlossenem Deckel.
- Fig. 2: eine Darstellung gemaß Fig. 1 bei vollständig geöffnetem Deckel.
- Fign. 3A und 3B: einen Längsschnitt durch den Seitenrand des Fahrzeugdachs im Bereich der Ausstellmechanik, wobei die Teile 3A und 3B unmittelbar hintereinander angeordnet sind, bei ausgestelltem Deckel.
- Fign. 4A und 4B: einen Längsschnitt analog zu den Fign. 3A und 3B bei vollständig geöffnetem Deckel.
- Fig. 5: den Querschnitt durch die Ausstell- und Abstützmechanik in Höhe der Linie V-V in Fig. 3B,
- Fig. 6: einen Teillängsschnitt im Bereich der Abstützmechanik des Deckels, und
- Fig. 7A und 7B: die Draufsicht auf die Mechanik bei geschlossenem Deckel, wobei die Teile 3A und 3B unmittelbar hintereinander angeordnet sind.

Das Fahrzeugdach 1 setzt sich aus einer oberhalb der Windschutzscheibe angeordneten, schwenkbaren Windabweislamelle 2, einen hinterhalb derselben liegenden verschiebbaren Deckel 3 sowie einer an diesen anschließenden festen Dachscheibe 4 zusammen. Seitlich werden die Windabweislamelle 2, der Deckel 3 und die Dachscheibe 4 von Seitenholmen 6 begrenzt.

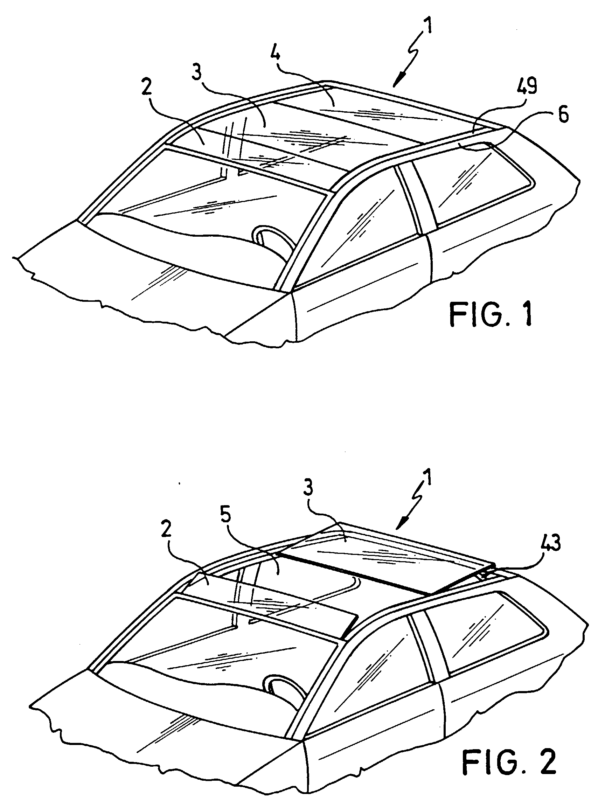

Im geschlossenen Zustand gemäß Fig. 1 bietet das Fährzeugdach 1 ein vollkommen glattflächiges Erscheinungsbild. Obwohl der Deckel 3 zur Freigabe einer Dachöffnung 5 nach hinten über das feste Fahrzeugdach 1 verschiebbar ist, sind gemäß der vorliegenden Enfindung hierzu keinerlei oberhalb des festen Fahrzeugdachs angeordnete Führungen erforderlich. Im ausgestellten und nach hinten verfahrenen Zustand wird der Deckel 3 vielmehr mittels seitlich im Bereich der Deckelhinterkante angelenkter Stützhebeln 43 abgestützt, welche in unterhalb des Niveaus der festen Dachhaut angeordneten Führungen verfahrbar sind und beim Austreten nach oben ein flexibles Dichtelement 49 teilweise verdrängen, welches zwischen den Seitenholmen 6 und den Dachteilen 2, 3 und 4 angeordnet ist.

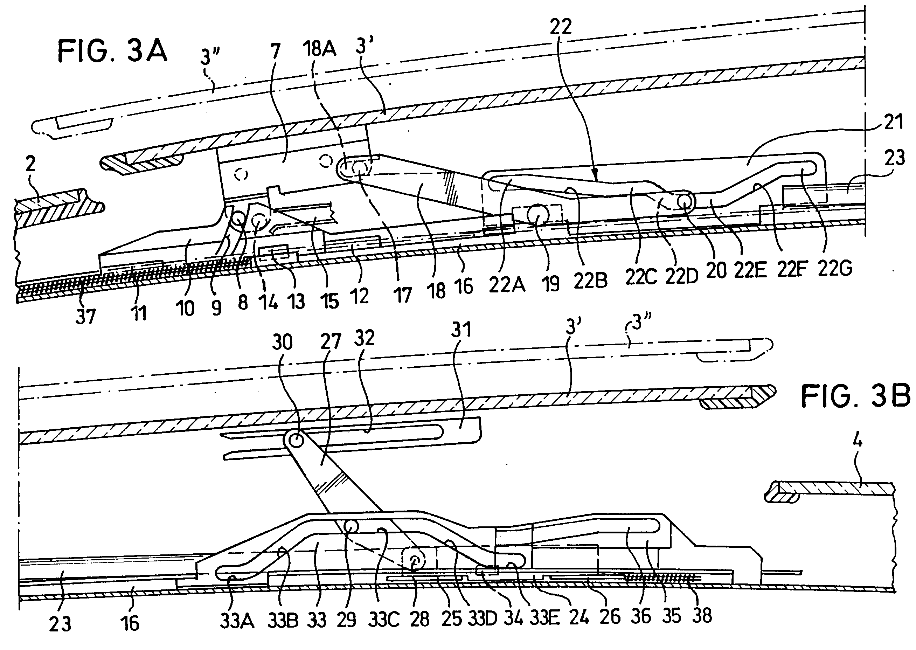

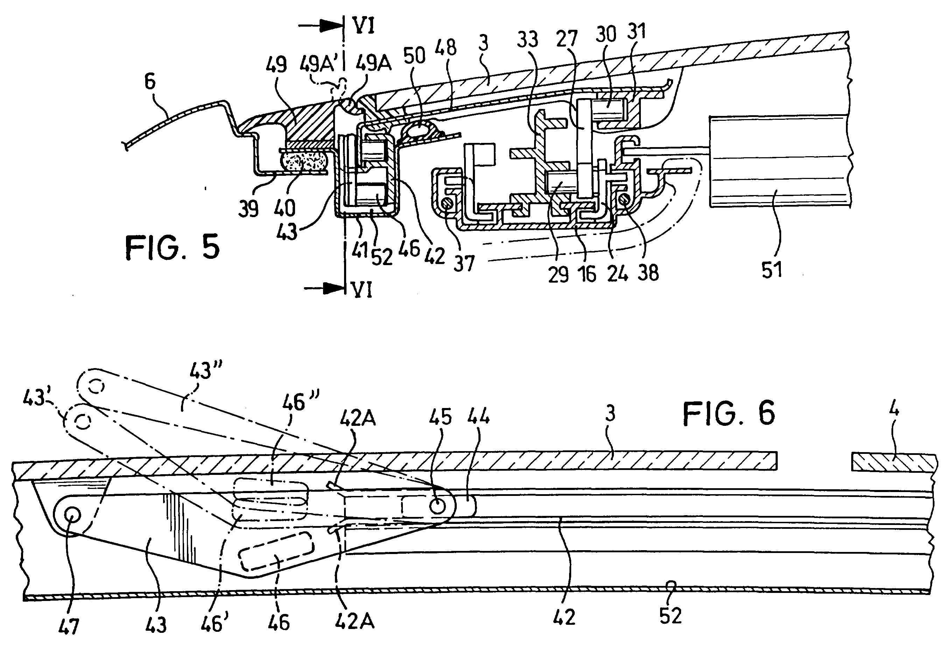

Die für das Ausstellen und Verschieben des Deckels 3 erforderliche Mechanik wird anschließend im Zusammenhang mit den Fign. 3A bis 4B beschrieben. Daran anschließend wird die seitlich außerhalb der Anhebemechanik angeordnete Abstützmechanik in Verbindung mit den Fign. 5 und 6 erläutert.

Nahe der Deckelvorderkante ist am Deckel 3 zu beiden Seiten jeweils ein nach unten abgewinkeltes Deckellager 7 angeordnet. Am Deckellager 7 ist ein Bolzen 8 vorgesehen, der in einer Kulisse 9 eines verschiebbar in einer Führungssschiene 16 gelagerten Steuerschlittens 10 gelagert ist und dort die Schwenkachse des Deckels 3 bei der Ausstell- bzw. Absenkbewegung des Deckels 3 definiert.

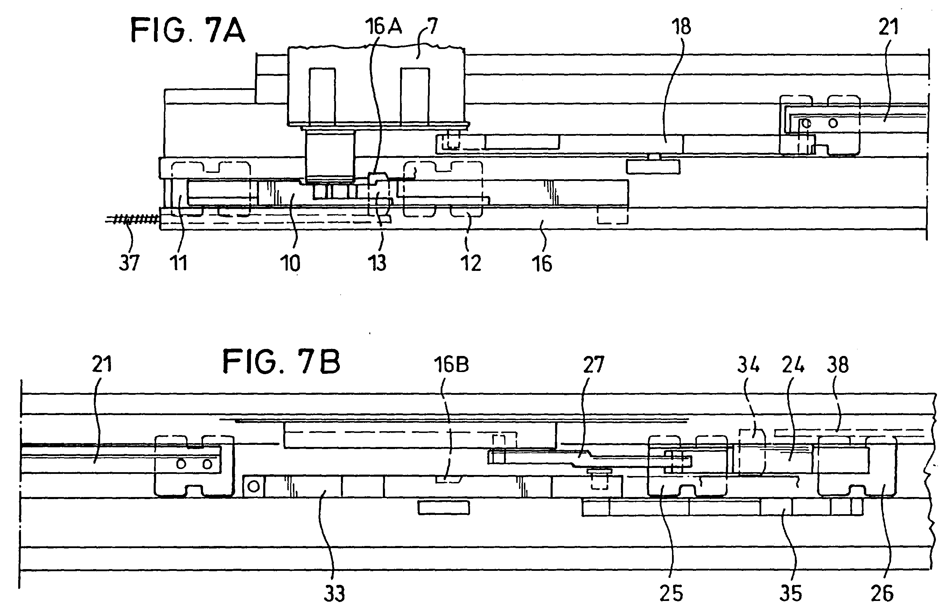

Der Steuerschlitten 10 ist mittels zweier Gleitplatten 11 bzw. 12 verschiebbar in den Führungsschienen 16 geführt. Während der Ausstell- bzw. Absenkbewegung, sowie in Schließposition des Deckels 3 wird der Steuerschlitten 10 von einem quer zur Verschieberichtung des Deckels 3 bewegbaren Riegelstein 13 mit der Führungsschiene 16 im Eingriff gehalten. Die Funktion eines solchen Riegelsteins 13 ist dem Fachmann beispielsweise aus der DE 39 30 756 A1 oder der DE 40 01 759 C1 prinzipiell bekannt und wird für die hier verwendete Mechanik in den Fign. 7A und 7B verdeutlicht.

Am Deckellager 7 ist ferner nahe dem Schwenkbolzen 8 ein Führungsbolzen 14 vorgesehen, der nach Anheben des Deckels im Bereich der Vorderkante in eine Führungsbahn 15 der Führungsschiene 16 eingeführt wird und der Führung des Deckels 3 beim Verschieben dient.

Am hinteren Ende des Deckellagers 7 ist ein Hebebolzen 17 angeordnet, der mit einer nach hinten offenen Kulisse 18A eines Anhebe-Hebels 18 zusammenwirkt. Der Anhebe-Hebel 18 ist als zweiseitiger Hebel ausgebildet, leicht abgewinkelt und in seinem mittleren Bereich in einem an der Führungsschiene 16 ortsfest angeordneten Drehlager 19 schwenkbar gelagert. Der nach vorne weisende Schenkel des Anhebe-Hebels 18 weist die bereits erwähnte, nach hinten geöffnete Kulisse 18A auf. Am nach hinten weisenden anderen Schenkel des Anhebe-Hebels 18 ist ein Führungsstift 20 angeordnet, der mit einer insgesamt mit 22 bezeichneten Kulissenbahn an einer in der Führungsschiene 16 verschiebbar gelagerten Anhebekulisse 21 im Eingriff steht. Die Anhebekulisse 21 dient der Bewegung des Anhebe-Hebels 18. Die Kulissenbahn 22 weist zu diesem Zweck mehrere Kulissenabschnitte 22A bis 22G auf.

Die Anhebekulisse 21 ist mittels einer stangenförmigen Verbindung 23 mit einem dahinter liegenden Gleitschlitten 24 verbunden, der über eine vorne liegende Gleitplatte 25 und eine hinten liegende Gleitplatte 26 verschiebbar in der Führungsschiene 16 geführt ist.

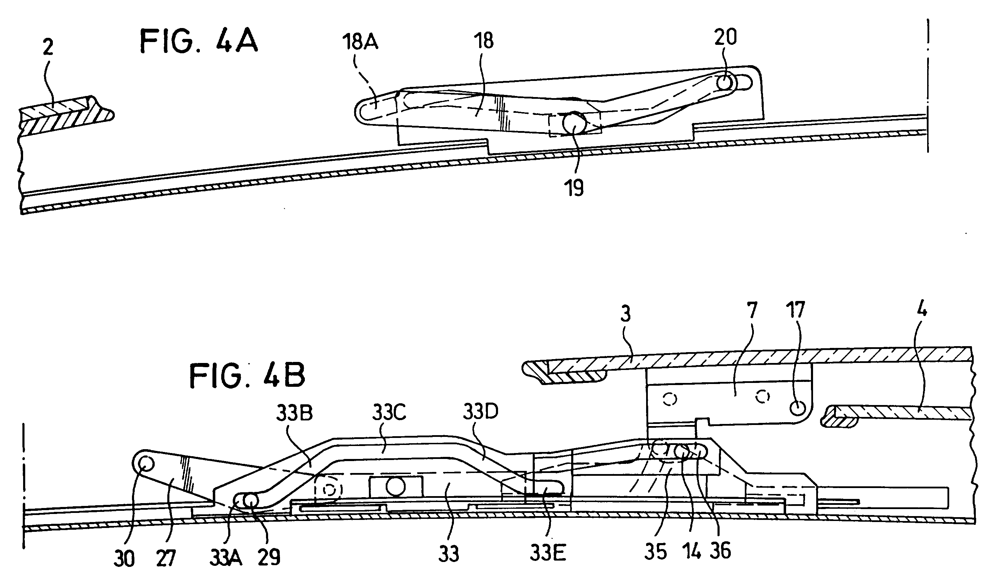

Während der vorne liegende Steuerschlitten 10 über seinen Riegelstein 13 wahlweise mit der Führungsschiene 16 verriegelbar oder für eine Verschiebung mit einem ersten Antriebskabel 37 koppelbar ist, das sich bei einer Öffungsbewegung des Deckels 3 nach hinten bewegt, ist der hinten liegende Gleitschlitten 24 über einen Riegelstein 34 wahlweise mit der Führungsschiene 16 verriegelbar oder mit einem zweiten Antriebskabel 38 koppelbar, welches sich bei einer Öffnungsbewegung des Deckels 3 nach vorne bewegt. Eine solche gegenläufige Bewegung zweier Antriebskabel 37 und 38, ausgehend von einem gemeinsamen Antriebsorgan, ist dem Fachmann beispielsweise aus der eingangs genannten DE 42 38 946 C1 (dort insbesondere aus Fig. 4) bekannt, und wird daher in dieser Anmeldung nicht im Detail beschrieben. Im Bereich des vorderen Endes des Gleitschlittens 24 ist an diesem mittels eines Schwenkbolzens 28 ein Ausstellhebel 27 angelehkt, der über einen in seinem mittleren Bereich angeordneten Führungsbolzen 29 mit einer ortsfest an der Führungsschiene 16 angeordneten Ausstellkulisse 33 im Eingriff steht und der mit einem an seinem dem Schwenkbolzen 28 gegenüberliegenden Ende angeordneten Ausstellbolzen 30 mit einer Kulissenbahn 32 einer Deckelkulisse 31 im Eingriff steht. Die Deckelkulisse 31 ist fest an der Unterseite des Deckels 3 angeordnet. Die Kulissenbahn 32 ist nach vorne geöffnet, sodaß der Ausstellbolzen 30 bei einer Verschiebebewegung des Deckels 3 nach hinten aus dieser austreten kann.

Die Ausstellkulisse 33 steuert die Bewegung des Ausstellhebels 27 bei einer Verschiebung des Gleitschlittens 24 und ihre Kulissenbahn weist zu diesem Zweck mehrere Abschnitte 33A bis 33E auf.
Im Bereich der Hinterkante der Dachöffnung 5 ist an der Führungsschiene 16 ferner eine ortsfeste Kulisse 35 angeordnet, die eine Kulissenbahn 36 aufweist, die zur Aufhahme und Begrenzung des Führungsbolzens 14 bei einer vollständigen Verschiebung des Deckels 3 nach hinten dient (siehe Fig. 4B). Durch die dem Endabschnitt der Kulissenbahn 36 vorgelagerte Rampe erfolgt kurz vor der vollständigen Öffnung noch ein Anheben der Deckelvorderkante, sodaß der geöffnete Deckel 3 annähernd parallel zur hinteren Dachhaut liegt (hier über der Dachscheibe 4).

Wie aus dem Querschnitt gemäß Fig. 5 ersichtlich, ist die komplette Anhebemechanik mit dem Ausstellhebel 27 und der Aussstellkulisse 33 im Randbereich des Deckels 3 vollständig unterhalb desselben angeordnet. Zum Verschieben nach hinten ist der Deckel 3 zusätzlich mit einer Abstützmechanik versehen, welche sich im äußersten Randbereich des Deckels 3, also von der Fahrzeugmitte her gesehen außerhalb der Anhebemechanik, befindet. Sowohl die Anhebemechanik mit dem Ausstellhebel 27 als auch die Abstützmechanik mit einem Stützhebel 43 befinden sich bei geschlossenem Deckel 3 vollständig unterhalb des Niveaus der festen Dachhaut 1.

Vom Seitenholm 6 ausgehend ist an diesem ein abgesenkter Flansch 39 ausgebildet, an dem mittels einer Kleberaupe 40 ein nach oben U-förmig offener Tragrahmen 41 befestigt ist. Der U-förmige Trog des Tragrahmens 41 dient dabei zum einen der Befestigung einer Führung 42 für den Stützhebel 43 und zum anderen mit seiner unten liegenden Bodenfläche gleichzeitig als längs verlaufende Wasserrinne 52. Dabei ist die Führung 42 an einer innenliegenden Seitenwand des Tragrahmens 41 in einem Abstand von der Bodenfläche desselben befestigt, sodaß die Führung 42 ebenfalls oberhalb und somit außerhalb des eigentlichen wasserführenden Bereiches angeordnet ist.

Der Bereich zwischen dem Seitenholm 6 und dem Rand des Deckels 3 ist mittels eines vorzugsweise über die gesamte Länge des Fahrzeugdachs 1 verlaufenden flexiblen Dichtelements 49 abgedeckt. Dieses Dichtelement 49 weist an seiner dem Seitenrand des Deckels 3 zugewandten Kante eine besonders flexible Dichtlippe 49A auf, durch die beim Ausstellen des Deckels 3 oder bei dessen Verschiebung nach hinten der Stützhebel 43 nach oben austritt und diese dabei in die mit 49A' bezeichnete Lage verdrängt.

Auf einem nach innen weisenden annähernd horizontalen Flansch des Tragrahmens 41 ist eine längsverlaufende Dichtung 50 angeordnet, welche den außenliegenden wasserführenden Bereich der Wasserrinne 52 und der darüber angeordneten Abstützmechanik mit dem Stützhebel 43 von der innenliegenden Anhebemechanik mit dem Ausstellhebel 27 trennt.

Da das Fahrzeugdach 1 mit seinem transparenten Deckel 3 und der dahinterliegenden festen Dachscheibe 4 bei intensiver Sonneneinstrahlung nicht genügend Schutz vor einer Aufheizung des Fahrzeuginnenraums bieten würde, ist an der Führungsschiene 16 wenigstens ein Rollo 51 angeordnet, das im ausgezogenen Zustand den Deckel und/oder die Dachscheibe 4 von unten her abdeckt. Es können auch zwei Rollos 51 unmittelbar hintereinander unterhalb der Trennstelle zwischen Deckel 3 und Dachscheibe 4 angeordnet sein, von denen einer zur Abschattung des Deckels 3 und der andere zur Abschattung der Dachscheibe 4 dient.

Wie aus Fig. 6 zu ersehen, weist der Stützhebel 43 an seinem nach vorne gerichteten Ende einen Anlenkbolzen 47 auf, mittels dem er an einem nach unten abgewinkelten Teil eines Deckelinnenblechs 48 schwenkbar angelenkt ist. An seinem hinteren Ende weist der Stützhebel 43 eine hinteres Gleitelement 44 auf, welches mit der schienenartigen Führung 42 ständig im Eingriff steht und welches eine Schwenkachse 45 für den Stützhebel 43 bildet. Etwa im mittleren Bereich ist am Stützhebel 43 ein vorderes Gleitelement 46 befestigt, das beim Anheben des Stützhebels 43 bei einer Ausstellbewegung des Deckels 3 mit angehoben wird und dabei in die mit 46' bezeichnete Lage gerät, in welcher es sich auf derselben Höhe mit der Führung 42 befindet und über die an dieser angeordneten Einführschrägen 42A bei einer Verschiebung des Deckels 3 nach hinten zusätzlich zu dem hinteren Gleitelement 44 in die Führung 42 eintritt und somit den Stützhebel 43 in seiner Position 43' stabil abstützt. Die mit 43'' bezeichnete Position des Stützhebels, bei der das vordere Gleitelement 46 eine mit 46'' bezeichnete Position einnimmt, ist optional dann vorgesehen, wenn die Ausstellposition des Deckels 3 mit seiner Hinterkante auf Wunsch des Kunden höher liegen soll als während der Verschiebebewegung nach hinten.
Der Stützhebel 43 nimmt an der Ausstellbewegung des Deckels nur passiv teil. Aktiv wird die Ausstell- und Absenkbewegung des Deckels 3 mittels des Ausstellhebels 27 gesteuert. Bei einem Verschieben des Deckels nach hinten übernimmt der Stützhebel 43 die stabile Abstützung der Hinterkante des Deckels 3 ab dem Moment, in dem sich beide Gleitelemente 44 und 46 im Eingriff mit der Führung 42 befinden.

Nachfolgend wird der Bewegungsablauf beim Öffnen des Deckels 3, ausgehend von seiner Schiießposition, beschrieben. In dieser befindet sich der Deckel 3 in einer bündigen Lage mit dem umgebenden festen Fahrzeugdach, das im hinteren Bereich durch die feste Dachscheibe 4 repräsentiert wird. Der Gleitschlitten 24 ist über den Riegelstein 34 mit dem zweiten Antriebskabel 38 gekoppelt, wobei der Riegelstein 34 außer Eingriff mit der Führungsschiene 16 ist. Der Steuerschlitten 10 ist hingegen über den Riegelstein 13 mit der Führungsschiene 16 verriegelt (siehe Fig. 7A). Zu Beginn der Ausstellbewegung bewegt sich das zweite Antriebskabel 38 in Fahrtrichtung nach vorne und das erste Antriebskabel 37 entgegen der Fahrtrichtung nach hinten. Dabei legt das erste Antriebskabel 37 zunächst einen Leerweg zurück.

Bei vollständig geschlossenem Deckel 3 befindet sich der Führungsbolzen 29 am Ausstellhebel 27 im Abschnitt 33E der Ausstellkulisse 33, wobei der Ausstellhebel 27 eine nach vom flach liegende Position einnimmt. Der Führungsstift 20 des Anhebe-Hebels 18 befindet sich im vorderen Abschnitt 22A der Kulissenbahn 22 der Anhebekulisse 21, wobei der Anhebe-Hebel 28 ebenfalls eine nach vorn flach liegende Position einnimmmt. Beim Verschieben des Gleitschlittens 24 nach vorne durchläuft der Führungsbolzen 29 des Ausstellhebels 27 den schräg nach vorne geneigten Abschnitt 33D der Ausstellkulisse 33, wobei der Ausstellhebel 27 eine zunehmend aufgerichtete Position einnimmt. Gleichzeitig durchläuft der Führungsstift 20 den Abschnitt 22B der Kulissenbahn 22, wobei der vordere Schenkel des Anhebe-Hebels 18 sich langsam anhebt und wobei über die Kulisse 18A an seiner Vorderkante und den Hebebolzen 17 das Deckellager 7 gleichzeitig mit angehoben wird. Der Deckel 3 wird dabei insgesamt hinten stärker als vorne angehoben und kommt mit seiner Hinterkante und seiner Vorderkante von einer Dichtung frei. Bei dieser Ausstellbewegung des Deckels 3 gleitet der Ausstellbolzen 30 in der Kulissenbahn 32 der Deckelkulisse 31 nach vorne. Durch die Führung des vorderen Deckellagers 7 mit dem Bolzen 8 in der schräg nach hinten aufwärts geneigten Kulisse 9 des Steuerschlittens 10 wird dem Deckel 3 beim Anheben gleichzeitig eine geringe Bewegung nach hinten aufgezwungen.

In seiner vollständig ausgestellten Position ist der Deckel 3 gemäß den Fign. 3A und 3B mit 3' bezeichnet. Diese Position entspricht gleichzeitig der Höhe, in welcher der Deckel 3 im geringen Abstand über die feste Dachscheibe 4 nach hinten verschiebbar ist. Durch eine entsprechende Gestaltung der Kulissenbahnen 22 und 33 läßt sich jedoch auch eine Ausstellposition des Deckels erreichen, die in den Fign. 3A und 3B mit 3'' angedeutet ist. In einer solchen Deckelposition wird an der Hinterkante ein vergrößerter Lüftungsspalt als Zwischenposition freigegeben. Vor dem Verschieben nach hinten würde der Deckel 3 in diesem Falle durch einen entsprechend geneigten Kulissenabschnitt der Kulissen 22 und 33 wieder in die mit 3' bezeichnete Position abgesenkt.

In der mit 3' bezeichneten Stellung des Deckels befindet sich, wie in den Fign. 3A und 3B dargestellt, der Führungsbolzen 29 des Ausstellhebels 27 im horizontalen mittleren Abschnitt 33C der Ausstellkulisse 33 und der Führungsstift 20 in einem in etwa horizontalen mittleren Abschnitt 22E der Kulissenbahn 22. Der Ausstellbolzen 30 steht immer noch im Eingriff mit der Kulissenbahn 32 der Deckelkulisse 31. Der Führungsbolzen 14 des vorderen Deckellagers 7 steht vor seinem Eintritt in die Führungsbahn 15 und das vordere Gleitelement 46 steht in der mit 46' bezeichneten Position vor seinem Eintritt in die Einführschrägen 42A der Führung 42. In dieser Lage ist der Leerweg des ersten Antriebskabels 37 beendet und ein an diesem Antriebskabel 37 vorgesehener Mitnehmer drängt den Riegelstein 13 aus seiner Verriegelungsposition mit der Aussparung 16A der Führungsschiene 16 heraus und in eine Kopplungsposition des Antriebskabels 37 mit dem Steuerschlitten 10 hinein. Bei einer weiteren Bewegung der Antriebskabel wird der Deckel 3 nunmehr durch die Koppelung des Bolzens 8 mit der Kulisse 9 des Steuerschlittens 10 nach hinten bewegt. Dabei tritt der Führungsbolzen 14 in die Führungsbahn 15 ein und das vordere Gleitelement 46 am Stützhebel 43 tritt in die Führung 42 ein. Bei einer weiteren Verschiebung des Deckels nach hinten tritt der Hebebolzen 17 am vorderen Deckellager 7 aus der nach hinten geöffneten Kulisse 18A des Anhebe-Hebels 18 aus und gleichzeitig oder kurz darauf tritt der Ausstellbolzen 30 am Ausstellhebel 27 aus der nach vorne geöffneten Kulissenbahn 32 der Deckelkulisse 31 aus. Durch die noch andauernde Kopplung des Gleitschlittens 24 mit dem zweiten Antriebskabel 38 wird der Ausstellhebel 27 durch den schräg nach vorne geneigten Bahnabschnitt 33B im Zusammenwirken mit dem Führungsbolzen 29 in eine abgesenkte Position bewegt. Durch die Koppelung der Anhebekulisse 21 über die Verbindung 23 mit dem Gleitschlitten 24 wird gleichzeitig der Anhebe-Hebel 18 beim Durchlaufen des Führungsstiftes 20 durch den schräg nach hinten aufwärts geneigten Bahnabschnitt 22F der Kulissenbahn 22 in eine nach vorne abgesenkte Position überführt.

Sobald der Führungsstift 20 den kurzen horizontalen Endabschnitt 22G der Kulissenbahn 22 und der Führungsbolzen 29 den vorderen horizontalen Endabschnitt 33A der Ausstellkulisse 33 erreicht haben, wird die Koppelung zwischen dem Gleitschlitten 24 und dem zweiten Antriebskabel 38 aufgehoben, wobei der Riegelstein 34 gleichzeitig in eine Verriegelungsposition des Gleitschlittens 24 mit einer Aussparung 16B der Führungsschiene 16 in eine dort vorhandene Aufnahme überführt wird. Bei der weiteren Verschiebung des Deckels 3 nach hinten legt dann das nunmehr entkoppelte zweite Antriebskabel 38 einen Leerweg nach vorne zurück.

Bei vollständig geöffnetem Deckel 3 wird, wie aus Fig. 4A und 4B zu entnehmen, der Führungsbolzen 14 in die am Ende der Führungsbahn 15 angeordnete, mit einem leicht ansteigenden Bahnabschnitt und einem horizontalen Endabschnitt ausgestattete Kulissenbahn 36 der ortsfesten Kulisse 35 eingeführt. Das vordere Deckellager 7 liegt dabei unmittelbar vor der festen Dachscheibe 4 an. Mittels der beschriebenen Mechanik läßt sich somit eine sehr große Öffnungsweite des außen geführten Deckels 3 erreichen. Der Anhebe-Hebel 18 und der Ausstellhebel 27 sind nach vorne abgesenkt und befinden sich dabei ebenfalls unter dem Niveau der umgebenden festen Dachhaut, sodaß keinerlei störender optischer Einfluß durch die Anhebemechanik vorliegt. Die Führung im Bereich der Hinterkante des Deckels erfolgt während der Verschiebebewegung ausschließlich durch die Stützhebel 43, die mit beiden Gleitelementen 44 bzw. 46 sicher in der dachfesten Führung 42 geführt sind, welche sich ebenfalls unterhalb des Niveaus des festen Fahrzeugdachs 1 befindet. Über das feste Fahrzeugdach 1 ragen somit in der vollständig geöffneten Position lediglich die relativ schlanken Stützhebel 43 heraus, welche beim Verschieben die Dichtlippe 49A des Dichtelementes 49 abschnittsweise verdrängen.

Die Schließbewegung erfolgt exakt in umgekehrter Reihenfolge wie vorstehend beschrieben.

### Bezugszeichenliste

- 1: Fahrzeugdach
- 2: Windabweislamelle
- 3: Deckel
- 4: Dachscheibe
- 5: Dachöffnung
- 6: Seitenholm
- 7: Deckellager (vom)
- 8: Bolzen
- 9: Kulisse
- 10: Steuerschlitten
- 11: Gleitplatte (von 10, vorn)
- 12: Gleitplatte (von 10, hinten)
- 13: Riegelstein (für 10)
- 14: Führungsbolzen
- 15: Führungsbahn
- 16: Führungsschiene
- 16A,16B: Aussparungen in 16 für 13 bzw. 14
- 17: Hebebolzen (an 7)
- 18: Anhebe-Hebel
- 18A: Kulisse (an 18)
- 19: Drehlager
- 20: Führungsstift
- 21: Anhebekulisse
- 22: Kulissenbahn (in 21)
- 22A-G: Abschnitte (von 22)
- 23: Verbindung (zwischen 21 und 24)
- 24: Gleitschlitten
- 25: Gleitplatte (von 24, vorn)
- 26: Gleitplatte (von 24, hinten)
- 27: Ausstellhebel
- 28: Schwenkbolzen (von 27
- 29: Führungsbolzen (an 27)
- 30: Ausstellbolzen (an 27)
- 31: Deckelkulisse
- 32: Kulissenbahn (von 31)
- 33: Ausstellkulisse
- 33A-E: Abschnitte (von 33)
- 34: Riegelstein (für 24)
- 35: Kulisse
- 36: Kulissenbahn (von 35)
- 37: (erstes) Antriebskabel
- 38: (zweites) Antriebskabel
- 39: Flansch
- 40: Kleberaupe
- 41: Tragrahmen
- 42: Führung
- 42A: Einführschrägen
- 43: Stützhebel
- 44: (hinteres) Gleitelement (von 43)
- 45: Schwenkachse (von 43)
- 46: (vorderes) Gleitelement (von 43)
- 47: Anlenkbolzen (von 43 an 48)
- 48: Deckelinnenblech
- 49: Dichtelement
- 49A: Dichtlippe
- 50: Dichtung
- 51: Rollo
- 52: Wasserrinne

## Patentansprüche

1. Fährzeugdach mit wenigstens einem Deckel (3), der zum Öffnen mittels eines Ausstellhebels (27) an seiner Hinterkante anhebbar und anschließend oberhalb des festen Fahrzeugdachs (1) verschiebbar ist, wobei die Verschiebebewegung mittels eines ersten Antriebskabels (37) und die Ausstellbewegung mittels eines gegenläufig dazu bewegbaren zweiten Antriebskabels (38) erfolgt, **dadurch gekennzeichnet**, daß jeweils eines der Antriebskabel (37 bzw. 38) zumindestens während eines Teils der Bewegung des anderen Antriebskabels einen Leerweg durchläuft, in dem die Ausstellbewegung oder die Verschiebebewegung des Deckels bewirkende Teile (Gleitschlitten 24, Steuerschlitten 10) von dem jeweiligen Antriebskabel (38 bzw. 37) entkoppelt sind.

2. Fahrzeugdach nach Anspruch 1, **dadurch gekennzeichnet**, daß ein die Verschiebebewegung des Deckels (3) bewirkender Steuerschlitten (10) während der Ausstellbewegung des Deckels (3) über einen Riegelstein (13) mit einer dachfesten Führungs-schiene (16) verriegelt ist.

3. Fahrzeugdach nach Aspruch 2, **dadurch gekennzeichnet**, daß das erste Antriebskabel (37) nach Beendigung eines Leerweges bei vollendeter Ausstellbewegung den Riegelstein (13) aus seiner Verriegelungsposition mit der Führungsschiene in eine Kopplungsposition des Antriebskabels (37) mit dem Steuerschlitten (10) bewegt.

4. Fahrzeugdach nach einem der vorhergehenden Ansprüche, **dadurch gekennzeichnet**, daß der die Ausstellbewegung der Deckelhinterkante bewirkende Ausstellhebel (27) an einem mit dem zweiten Antriebskabel (38) über einen Riegelstein (34) koppelbaren Gleitschlitten (24) angelenkt ist, der nach vollendeter Ausstellbewegung mittels des Riegelsteins (34) vom Antriebskabel (38) entkoppelbar und gleichzeitig mit der Fühzungsschiene (16) verriegelbar ist.

5. Fahrzeugdach nach Anspruch 4, **dadurch gekennzeichnet**, daß mit dem Gleitschlitten (24) ein Steuerelement (Anhebekulisse 21) verbunden ist, welches bei einer Ausstellbewegung der Deckelhinterkante eine überlagerte Anhebebewegung der Deckelvorderkante bewirkt.

6. Fahrzeugdach nach Anspruch 5, **dadurch gekennzeichnet**, daß das Steuerelement (Anhebekulisse 21) auf einen ortsfest gelagerten Anhebe-Hebel (18) einwirkt, der mit einem am Deckel (3) befestigten Hebebolzen (17) zusammenwirkt.

7. Fahrzeugdach nach Anspruch 6, **dadurch gekennzeichnet**, daß die Entkoppelung des Gleitschlittens (24) vom zweiten Antriebskabel (38) erst erfolgt, nachdem der Ausstellhebel (27) sowie gegebenenfalls der Anhebe-Hebel (18) in eine abgesenkte Position gebracht worden sind.

8. Fahrzeugdach nach wenigstens einem der vorhergehenden Ansprüche, **dadurch gekennzeichnet**, daß der Deckel (3) während der Verschiebebewegung von einem vom Ausstellhebel (27) unabhängigen Stützhebel (43) abgestützt wird.

9. Fahrzeugdach nach Anspruch 8, **dadurch gekennzeichnet**, daß der Deckel (3) während der Verschiebebewegung ausschließlich von dachfesten Führungen (Führungsbahn 15, Führung 42) geführt wird, die unterhalb des Niveaus der festen Dachhaut angeordnet sind.

10. Fahrzeugdach mit einer Mechanik (Antriebskabel 37, 38; Gleitschlitten 24, Steuerschlitten 10) gemäß einem der vorhergehenden Ansprüche, **dadurch gekennzeichnet**, daß sie für eine Betätigung eines Abschattungssystems aus wenigstens zwei Himmelteilen und/oder zwei Rollos verwendet wird, sodaß wenigstens eines der Abschattungselemente (Himmelteil, Rollo) zumindestens zeitweise unabhängig von dem oder den anderen Abschattungselementen (Himmelteil, Rollo) bewegbar ist.
